# EUROPÄISCHE PATENTANMELDUNG

(11) **EP 1 507 078 A1**
(43) Veröffentlichungstag der Anmeldung: **16.02.2005**
(21) Anmeldenummer: 03018239.8
(22) Anmeldetag: 11.08.2003
(51) Int. Cl.: F02C 3/30

(54) **Verfahren zum Betreiben einer Gasturbinenanlage und Gasturbinenanlage**

(71) Anmelder: SIEMENS AKTIENGESELLSCHAFT, 80333 München (DE)
(72) Erfinder: Minne, Michael, 46562 Voerde (DE)

(57) **Zusammenfassung**

Die Erfindung betrifft ein Verfahren zum Betreiben einer Gasturbinenanlage (1), bei dem durch einen von einer Gasturbine (2) angetriebenen elektrischen Generator (4) einen Strom mit einer vorgegeben Soll-Frequenz (f₀) erzeugt wird, wobei der Gasturbine (2) Luft zur Verbrennung zugeführt und die Frequenz (f) zeitaufgelöst überwacht wird. Ein Verfahren zum Betreiben einer Gasturbinenanlage wird vorgeschlagen, bei dem eine Überfeuerung der Gasturbine zum stützen der Frequenz vermieden wird, indem bei einer Abweichung der Frequenz von der Soll-Frequenz (f₀) ein Stellsignal generiert wird, durch welches ein Volumenstrom einer Flüssigkeit eingestellt wird, die in die Luft eingedüst wird, so dass die Netto-Leistungsabgabe der Gasturbine (2) gesteigert wird und so der Frequenzabweichung entgegengewirkt wird.

## Beschreibung

Die Erfindung betrifft ein Verfahren zum Betreiben einer Gasturbinenanlage gemäss dem Oberbegriff des Anspruchs 1 und eine Gasturbinenanlage gemäss dem Oberbegriff des Anspruchs 8.

Es sind Verfahren zum Betreiben einer Gasturbinenanlage mit einer Gasturbine und einem elektrischen Generator bekannt. Dabei ist die Gasturbine mit dem Generator über eine gemeinsame Rotorwelle gekoppelt. Zur Umwandlung fossiler Energie in elektrische Energie wird in der Gasturbine ein Brennstoff zu einem heißen Gas verbrannt und in Rotationsenergie im Rotor umgewandelt. Dabei treibt die Gasturbine den Generator über die Rotorwelle an, der dann elektrischen Strom mit einer festen Frequenz erzeugt.

Aufgrund einer anstehenden zu großen elektrischen Last am Generator und bei gleichzeitiger Auslastung der Gasturbine kann die Frequenz des erzeugten Stromes sich ändern. Um diese Frequenzänderung zu kompensieren - was allgemein als Frequenzstützung bezeichnet wird -, muß die Gasturbine mehr Leistung abgeben. Dazu wurde bisher die Brennstoffzufuhr der Gasturbine erhöht, wodurch dann mehr Energie dem Generator zur Verfügung stand.

Jedoch entsteht durch die Erhöhung der Brennstoffzufuhr ein heißeres Gas, welches zu einer Überfeuerung der Gasturbine führen kann. Dabei können die dem Gas ausgesetzten Komponenten durch die höhere Gastemperatur Schaden nehmen.

Aufgabe der Erfindung ist es daher, ein Verfahren zum Betreiben einer Gasturbinenanlage anzugeben, bei der eine Überfeuerung der Gasturbine zum Stützen der Frequenz vermieden wird. Eine weitere Aufgabe der Erfindung besteht in der Angabe einer Gasturbine, die insbesondere zur Durchführung des Verfahrens geeignet ist.

Die auf das Verfahren gerichtete Aufgabe wird erfindungsgemäß durch die Merkmale des Anspruchs 1 gelöst. Die auf die Gasturbinenanlage gerichtete Aufgabe wird erfindungsgemäß durch die Merkmale des Anspruchs 8 gelöst. Vorteilhafte Ausgestaltungen sind in den Unteransprüchen angegeben.

Die Lösung sieht vor, dass bei einer Abweichung der Frequenz von der Sollfrequenz ein Stellsignal generiert wird, durch welches ein Volumenstrom einer Flüssigkeit eingestellt wird, wobei die Flüssigkeit in die zur Verbrennung genutzten Luft eingedüst wird, so dass sich die Netto-Leistungsabgabe der Gasturbine steigert und dem Generator so mehr Energie zur Verfügung steht, um der Frequenzabweichung entgegenzuwirken. Das bisher nur im Zusammenhang mit einer allgemeinen Leistungssteigerung als "Nasse Verdichtung" bzw. "Wet Compression" im Leistungsbetrieb von Gasturbinen angewendete Prinzip der gezielten Eindüsung von Flüssigkeit, z.B. Wasser, wird jetzt jedoch erstmals im Hinblick auf eine Frequenzstützung in einem Regelkreis eingesetzt.

Die für die Zeitdauer der Abweichung erfolgt die Eindüsung einer Flüssigkeit in einen vom Verdichter angesaugten Luftstrom. Dadurch wird der Volumenmassenstrom erhöht, so dass dieser bei der Verbrennung ein höheres Energieniveau aufweist, der dann in der Turbine mittels des Rotors an den Generator weitergegeben werden kann. Die Abweichung der Frequenz, die durch eine Überlastung der Gasturbinenanlage hervorgerufen wird, kann somit schneller entgegengewirkt werden.

Besonders vorteilhaft ist die Ausgestaltung, bei der erst nach dem Eintreten der Abweichung der Frequenz eine Flüssigkeit eingedüst wird. Im stationären Betrieb der Gasturbine saugt der Verdichter nur trockene, d.h. nicht mit einer Flüssigkeit angereicherte Umgebungsluft an. Mit dem Erkennen der Abweichung der Frequenz werden der zu verdichtenden Luft eine Flüssigkeit durch Eindüsen untergemischt, die den Massenstrom erhöht.

In einer bevorzugten Ausführungsform wird der eingedüste Volumenstrom nach dem Eintreten der Abweichung der Frequenz vergrößert. Somit besteht die Möglichkeit, das bereits vor Eintreten der Abweichung, also bei der Erzeugung des Stromes mit vorgegebener Frequenz bereits schon eine Flüssigkeit in die Luft eingedüst wird. Tritt dann eine Abweichung der Frequenz auf, so wird der Volumenstrom weiter vergrößert, was zu einer Steigerung der Netto-Leistungsabgabe der Gasturbine führt.

Vorteilhaft ist das Verfahren, wenn bei einer Absenkung der Frequenz gegenüber dem vorgegebenen Soll-Wert der Volumenstrom eingestellt wird.

Da eine Frequenzänderung schnellstmöglich entgegengewirkt werden muss, ist es vorteilhaft, wenn spätestens nach einer Zeitdauer von 10 Sekunden nach dem Eintreten der Abweichung die Flüssigkeit eingedüst wird. Besonders vorteilhaft wird nach einer Zeitdauer von etwa 5 Sekunden nach dem Eintreten der Abweichung die Flüssigkeit eingedüst.

Aus Kostengründen wird als Flüssigkeit Wasser (H₂O) eingedüst.

Die Lösung für die auf die Gasturbinenanlage gerichtete Aufgabe sieht erfindungsgemäß vor, dass die Kontrolleinrichtung mit einem Soll-Wert und einem Ist-Wert der Frequenz als Eingangssignale bespeisbar ist und das die Eindüsvorrichtung mit einem Ausgangssignal der Kontrolleinrichtung ansteuerbar ist. Die Kontrolleinrichtung erkennt durch einen Soll-Ist-Wert-Vergleich eine Abweichung der Frequenz vom Sollwert und kann bei dem Vorliegen einer Abweichung die Eindüsvorrichtung über ihren Ausgang derart ansteuern, dass der Volumenstrom der eingedüsten Flüssigkeit erhöht wird.

In einer vorteilhaften Ausgestaltung weist die Eindüsvorrichtung Mittel zum Fördern der Flüssigkeit auf, welche mit einem Ausgang der Kontrolleinrichtung verbunden sind. Als Mittel zum Fördern ist dabei eine Pumpe vorgesehen, die die Flüssigkeit fördert.

Stromaufwärts steht die Pumpe mit einem druckbeaufschlagten Flüssigkeitsspeicher und stromabwärts mit mehreren Düsen in Strömungsverbindung, durch die die von der Pumpe geförderte Flüssigkeit in die Luft des Verdichters eindüsbar ist. Zum Eindüsen können vorteilhafterweise geeignete Eindüsevorrichtungen mit einer Vielzahl von Düsen vorgesehen sein, so dass eine möglichst gute Mischung mit der eingedüsten Flüssigkeit mit der Luft erreichbar ist. Es können zusätzlich Mischvorrichtungen, z.B. statische Mischer, eingesetzt werden. Dabei kann die Kontrolleinrichtung den Volumenstrom der eingedüsten Flüssigkeit in die Luft steuern.

Kostengünstig ist als Flüssigkeit Wasser vorgesehen.

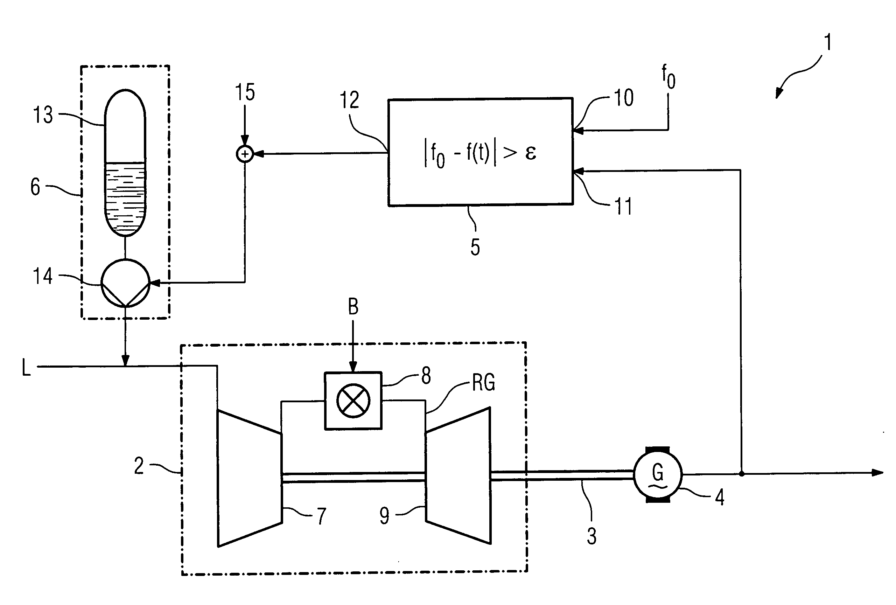

Die Erfindung wird anhand einer Zeichnung erläutert. Dabei zeigt die einzige Figur eine Gasturbinenanlage mit einem Generator, einer Gasturbine und einer Kontrolleinrichtung.

Die einzige Figur zeigt den schematischen Aufbau einer Gasturbinenanlage. Die Gasturbinenanlage 1 umfasst eine Gasturbine 2 mit einer Rotorwelle 3, die an einen Generator 4 angekoppelt ist. Eine Kontrolleinrichtung 5 dient zur Überwachung der Frequenz des Stromes, der vom Generator 4 beim Betrieb der Gasturbinenanlage 1 erzeugt wird.

Die Gasturbine 2 umfasst einen Verdichter 7, eine Brennkammer 8 und eine Turbine 9.

Eine Eindüsvorrichtung 6 zur Eindüsung von Wasser oder Deionat ist mit einem Einlass der Gasturbine 2 für Luft *L* verbunden.

Die Kontrolleinrichtung (5) weist zwei Eingänge 10, 11 auf. An einem Eingang 10 liegt der Soll-Wert *f*_{*0*} der Frequenz an und am weiteren Eingang 11 der zeitaufgelöste Ist-Wert *f(t)* der Frequenz des erzeugten Stromes.

Die Eindüsvorrichtung 6 umfasst einen druckbeaufschlagten Wasserbehälter 13, der stromaufwärts einer Pumpe 14 vorgeschaltet ist. Die Pumpe 14 ist stromab mit dem Einlass des Verdichters 7 der Gasturbine 2 verbunden.

Während des Betriebes der Gasturbinenanlage 1 saugt der Verdichter 7 Luft L an und verdichtet diese. Die verdichtete Luft L wird zur Brennkammer 8 geführt, dort mit einem Brennmittel *B* vermischt und zu einem Rauchgas *RG* verbrannt. Von der Brennkammer 8 aus wird das Rauchgas *RG* zur Turbine 9 geführt, in der es sich impulsübertragend an der Rotorwelle 3 der Gasturbinenanlage 1 entspannt und diese dabei antreibt. Die Rotationsenergie der Rotorwelle 3 wird dem Generator 4 zugeführt, der diese in elektrische Energie in Form eines elektrischen Stromes mit einer vorgegebenen Frequenz von 50 Hz oder 60 Hz umwandelt.

Eine Frequenzabweichung des Ist-Wertes *f(t)* vom Soll-Wert *f*_{*0*} kann von der Kontrolleinrichtung 5 erkannt werden. Für diesen Fall generiert die Kontrolleinrichtung 5 dann an ihrem Ausgang 12 ein Ausgangssignal, welches als Stellsignal zu der Eindüsvorrichtung (6) geführt wird.

Die Kontrolleinrichtung 5 steuert mit ihrem Ausgangssignal die Pumpe 14 der Eindüsvorrichtung 6. Unterschreitet der Ist-Wert *f(t)* der Frequenz den Soll-Wert *(f*_{*0*}*),* so generiert die Kontrolleinrichtung 5 ein Ausgangssignal, welches der Pumpe 14 als Stellsignal dient, so dass diese Wasser in den Verdichter 7 zum Eindüsen fördert.

Der im Verdichter (7) durch die Eindüsung des Wassers vergrößerte Volumenmassenstrom bedingt nach der Verbrennung des Brennmittels *B* in der Brennkammer 8 eine höhere Netto-Leistungsabgabe des Rauchgases *RG* in der Turbine 9. Die Leistung wird dem Generator 4 mittels des Rotors 3 zugeführt. Die zusätzliche Leistung dient dabei zur Erhöhung der Frequenz auf den Soll-Wert *f*_{*0*} und wirkt somit der Frequenzänderung entgegen.

Da die wirksame Leistungssteigerung in der Turbine erst zeitverzögert nach der Eindüsung der Flüssigkeit eintritt, wird das Verfahren zur Frequenzstützung erst 5 Sekunden nach dem Erkennen der Abweichung gestartet. Dabei sollte die Abweichung der Frequenz demgemäss eine Mindestdauer aufweisen, da sonst trotz bei einem frühzeitigen Wegfall der Abweichung unnötigerweise die Eindüsung von Wasser erfolgt. Gleichfalls sollte den Betrag der Abweichung einen Schwellwert ε überschreiten, bevor das Verfahren zur Frequenzstützung eingeleitet wird.

Mit einem Stellsignal 15 kann die Pumpe 14 der Eindüsvorrichtung 6 ebenfalls angesteuert werden, um eine Leistungssteigerung der Gasturbine 2 zu erzielen. Tritt in diesem Betrieb eine Absenkung der Frequenz ein, so kann dies durch die Kontrolleinrichtung 5 erkannt werden. Das Stellsignal des Ausgangs 12 wird mit einem Stellsignal 15 mittels einer Addition verknüpft, so das die Pumpe 14 noch mehr Wasser in die vom Verdichter 7 angesaugt Luft L eindüst.

## Patentansprüche

1. Verfahren zum Betreiben einer Gasturbinenanlage (1),
bei dem durch einen von einer Gasturbine (2) angetriebenen elektrischen Generator (4) ein Strom mit einer vorgegeben Soll-Frequenz (f₀) erzeugt wird,
wobei der Gasturbine (2) Luft (L) zur Verbrennung zugeführt und
die Frequenz (f(t)) zeitaufgelöst überwacht wird,
**dadurch gekennzeichnet, dass**
bei einer Abweichung der Frequenz (f(t)) von der Soll-Frequenz (f₀) ein Stellsignal (15) generiert wird, durch welches ein Volumenstrom einer Flüssigkeit eingestellt wird, die in die Luft (L) eingedüst wird, so dass die Netto-Leistungsabgabe der Gasturbine (2) gesteigert wird und so der Frequenzabweichung entgegengewirkt wird.

2. Verfahren nach Anspruch 1,
**dadurch gekennzeichnet, dass**
erst nach dem Eintreten der Abweichung der Frequenz (f(t)) eine Flüssigkeit eingedüst wird.

3. Verfahren nach Anspruch 1,
**dadurch gekennzeichnet, dass**
der eingedüste Volumenstrom nach dem Eintreten der Abweichung der Frequenz (f(t)) vergrößert wird.

4. Verfahren nach Anspruch 1 oder 2,
**dadurch gekennzeichnet, dass**
bei einer Absenkung der Frequenz (f(t)) gegenüber dem vorgegebenen Sollwert (f₀) der Volumenstrom eingestellt wird.

5. Verfahren nach einem der vorgehenden Ansprüche,
**dadurch gekennzeichnet, dass**
spätestens nach einer Zeitdauer von 10 Sekunden nach dem Eintreten der Abweichung die Flüssigkeit eingedüst wird.

6. Verfahren nach einem der Ansprüche 1 bis 4,
**dadurch gekennzeichnet, dass**
spätestens nach einer Zeitdauer von 5 Sekunden nach dem Eintreten der Abweichung die Flüssigkeit eingedüst wird.

7. Verfahren nach einem der vorgehenden Ansprüche,
**dadurch gekennzeichnet, dass**
als Flüssigkeit Wasser (H₂O) eingedüst wird.

8. Gasturbinenanlage (1),
insbesondere zur Durchführung des Verfahrens nach einem der vorherigen Ansprüchen,
mit einem Generator (4) und einer Gasturbine (2),
die einen Verdichter (7) mit einer stromaufwärts eines Verdichterausgangs vorgesehen Eindüsvorrichtung (6) zum Eindüsen einer Flüssigkeit in einen Fluidstrom aufweist, mit einer Kontrolleinrichtung (5), welche eine Frequenz (f₀) eines vom Generator (4) erzeugbaren elektrischen Stromes überwacht,
**dadurch gekennzeichnet, dass**
die Kontrolleinrichtung (5) mit einem Soll-Wert (f₀) und einem Ist-Wert (f(t)) der Frequenz als Eingangssignale bespeisbar ist, und dass die Eindüsvorrichtung (6) mit einem Ausgangssignal der Kontrolleinrichtung (5) ansteuerbar ist.

9. Vorrichtung nach Anspruch 8,
**dadurch gekennzeichnet, dass**
die Eindüsvorrichtung (6) regelbare Mittel zum Fördern der Flüssigkeit aufweist, welche mit einem Ausgang (12) der Kontrolleinrichtung (5) verbunden sind.

10. Vorrichtung nach Anspruch 8 oder 9,
**dadurch gekennzeichnet, dass**
als Mittel zum Fördern der Flüssigkeit eine Pumpe (14) vorgesehen ist.

11. Vorrichtung nach Anspruch 8, 9 oder 10,
**dadurch gekennzeichnet, dass**
die Pumpe (14) stromaufwärts mit einem druckbeaufschlagten Flüssigkeitsspeicher in Strömungsverbindung steht.

12. Vorrichtung nach einem der Anspräche 8 bis 11,
**dadurch gekennzeichnet, dass**
als Flüssigkeit Wasser (H₂O) vorgesehen ist.
